# EUROPÄISCHE PATENTSCHRIFT

(11) **EP 1 842 415 B1**
(45) Veröffentlichungstag und Bekanntmachung des Hinweises auf die Patenterteilung: **13.07.2011**
(21) Anmeldenummer: 07105200.5
(22) Anmeldetag: 29.03.2007
(51) Int. Cl.: A01D 41/12, A01F 12/40

(54) **Leitblech für eine Verteilvorrichtung eines Strohhäckslers**
Guide plate for the distributor device of a chaff chopper
Déflecteur pour un dispositif de répartition d'un système à hacher la paille

(30) Priorität: 08.04.2006 DE 102006016674
(43) Veröffentlichungstag der Anmeldung: 10.10.2007
(73) Patentinhaber: Deere & Company, Moline, IL 61265-8098 (US)
(72) Erfinder: Lauer, Fritz, 66894, Krähenberg (DE); Klein, Oliver, 66822, Lebach (DE)
(74) Vertreter: Holst, Sönke

(56) Entgegenhaltungen:
- EP-A- 1 374 663
- EP-A- 1 690 447
- EP-A2- 1 031 271
- WO-A-2005/102027

## Beschreibung

Die Erfindung betrifft ein Leitblech für eine Verteilvorrichtung eines Strohhäckslers, das durch einen oberen Rand, einen vorderen Rand, einen unteren Rand und einen rückwärtigen Rand begrenzt wird und in sich gekrümmt ist, wobei sich ein oberer Bereich des rückwärtigen Rands vom rückwärtigen Ende des oberen Rands nach unten und vorn erstreckt.

### Stand der Technik

Mähdrescher werden zur Ernte von Korn enthaltenden Pflanzen verwendet. Die Pflanzen werden durch einen geeigneten Erntevorsatz, insbesondere ein Schneidwerk oder einen Maispflücker, vom Feld aufgenommen und mittels eines Schrägförderers in das Innere des Mähdreschers gefördert. Dort werden sie gedroschen und in einer Trenneinrichtung wird das im ausgedroschenen Erntegut verbliebene Korn abgetrennt. Ein im Wesentlichen aus Stroh bestehender Erntegutrestestrom wird an der Rückseite des Mähdreschers ausgestoßen und ungehäckselt als Schwad oder gehäckselt in Breitverteilung auf dem Feld abgelegt. Das beim Dreschen und Trennen gewonnene Korn wird in einer Reinigungseinrichtung von Verunreinigungen befreit und in einem Korntank gespeichert, aus dem es durch einen Entladeschneckenförderer auf ein Transportfahrzeug überladen werden kann.

Das Häckseln des Strohs erfolgt in der Regel durch einen Strohhäcksler, der mit einem Gehäuse und einem darin drehbar angeordneten, pendelnd gelagerte Messer tragenden Rotor ausgestattet ist. Die Drehachse des Rotors erstreckt sich horizontal und quer zur Fahrtrichtung. Die Messer des Rotors wirken mit feststehenden, am Gehäuse befestigten Gegenmessern zusammen. Das gehäckselte Stroh wird nach hinten in ein mit Leitblechen besetztes Verteilergehäuse ausgestoßen. Die sich vertikal und in Fahrtrichtung erstreckenden Leitbleche sind - in unterschiedlichem, von ihrer seitlichen Position innerhalb des Verteilergehäuses abhängigen Maße - seitlich nach außen gekrümmt oder gewölbt, um das Stroh in seitlicher Richtung abzulenken, so dass es gleichmäßig über die Schnittbreite des Mähdreschers über dem Feld verteilt wird.

Die EP 1 031 271 A beschreibt einen derartigen Mähdrescher mit einem Strohhäcksler, bei dem die rückwärtigen Enden der Leitbleche gegenüber der Vertikalen abgeschrägt sind. Dadurch wird erreicht, dass der Ablenkwinkel von der jeweiligen vertikalen Position des daran entlang strömenden Partikels abhängt. Weiter oben fliegende Partikel werden durch das Leitblech weiter mitgeführt und um einen größeren Winkel abgelenkt als weiter unten fliegende Partikel. Auf diese Weise soll auch bei feuchtem Erntegut eine homogene Breitverteilung erzielt werden. Es werden auch treppenstufenförmig, bogenförmig und schlangenförmig verlaufende Enden der Leitbleche vorgeschlagen. Die DE 200 19 686 U beschreibt eine ähnliche Verteileinrichtung mit geraden Enden der Leitbleche.

Die EP 1 374 663 A beschreibt einen Mähdrescher mit unterschiedlichen Leitblechen, von denen einige nur den unteren oder nur den oberen Teil des Erntegutrestestroms seitlich ablenken. Die rückwärtigen Enden der Leitbleche sind - unabhängig von ihrer Position - geradlinig nach vorn und unten abgeschrägt.

Ein Problem der Leitbleche mit abgeschrägten Enden ergibt sich, wenn auch die Erntegutreste aus der Reinigungseinrichtung mit durch den Strohhäcksler geführt werden (s. DE 102 56 744 A), um separate Spreuverteiler einzusparen. In diesen Erntegutresten sind nicht nur Spreu und Kaff, sondern auch schwerere Verlustkörner enthalten. Die Verlustkörner und schwerere Kaffanteile werden vom Strohhäcksler wegen ihrer relativ hohen Masse in einer tangential zum Boden des Strohhäckslers verlaufenden Richtung abgegeben und strömen an den unteren Bereichen der Leitbleche entlang. Da diese Bereiche relativ kurz sind, werden die Verlustkörner und die schwereren Kaffanteile nicht oder kaum in seitlicher Richtung abgelenkt. Man erhält somit eine Anhäufung der Verlustkörner in der Mitte des Mähdreschers, die zu einem unerwünschten streifenförmigen Saataufgang führt.

### Aufgabe der Erfindung

Das der Erfindung zu Grunde liegende Problem wird darin gesehen, ein Leitblech bereitzustellen, das eine gleichmäßigere seitliche Verteilung von schwereren Kaffanteilen und Verlustkörnern ermöglicht.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf ein in sich gekrümmtes Leitblech, das durch einen oberen Rand, einen vorderen Rand, einen unteren Rand und einen rückwärtigen Rand begrenzt wird. Ein oberer Bereich des rückwärtigen Rands erstreckt sich vom rückwärtigen Ende des oberen Rands nach unten und vorn. Es wird vorgeschlagen, dass sich der untere Rand weiter nach hinten erstreckt als ein unteres Ende des oberen Bereichs des rückwärtigen Rands. Das rückwärtige Ende des Leitblechs ist somit V- oder schwalbenschwanzartig geformt.

Da das Leitblech nicht flach, sondern in sich gekrümmt ist, werden am oberen Rand entlang strömende Erntegutrestepartikel weiter in seitliche Richtung abgelenkt als weiter unten (aber oberhalb des unteren Endes des oberen Bereichs des rückwärtigen Rands) entlang des Leitblechs strömende Erntegutrestepartikel, was zu einer breiten seitlichen Streuung und gleichmäßigen Verteilung der leichteren und deshalb am oberen Bereich des Leitblechs entlang strömenden Erntegutreste führt. Unterhalb des unteren Endes des oberen Bereichs des rückwärtigen Rands ist das Leitblech jedoch wieder länger gestaltet, um die hier am Leitblech entlang strömenden, schwereren Erntegutrestepartikel um einen möglichst großen Winkel nach außen abzulenken. Auf diese Weise vermeidet man eine Streifenbildung durch schwerere Erntegutrestepartikel, insbesondere durch Verlustkörner aus der Reinigungseinrichtung, die durch den Strohhäcksler geführt werden, da diese relativ weit nach außen abgelenkt werden und sich bei ihrem weiteren Flug näherungsweise homogen auf dem Boden verteilen.

### Ausführungsbeispiel

In den Zeichnungen ist ein nachfolgend näher beschriebenes Ausführungsbeispiel der Erfindung dargestellt. Es zeigt:
- Fig. 1: eine schematische Seitenansicht eines Mähdreschers mit einem Strohhäcksler und einer Verteilvorrichtung,
- Fig. 2: einen vertikalen Schnitt durch den Strohhäcksler und die Verteilvorrichtung,
- Fig. 3: eine perspektivische rückwärtige Ansicht des Strohhäckslers und der Verteilvorrichtung,
- Fig. 4: eine Draufsicht auf ein Leitblech der Verteilvorrichtung,
- Fig. 5: eine seitliche Ansicht des Leitblechs aus Figur 4, und
- Fig. 6: eine perspektivische Ansicht des Leitblechs aus Figur 4.

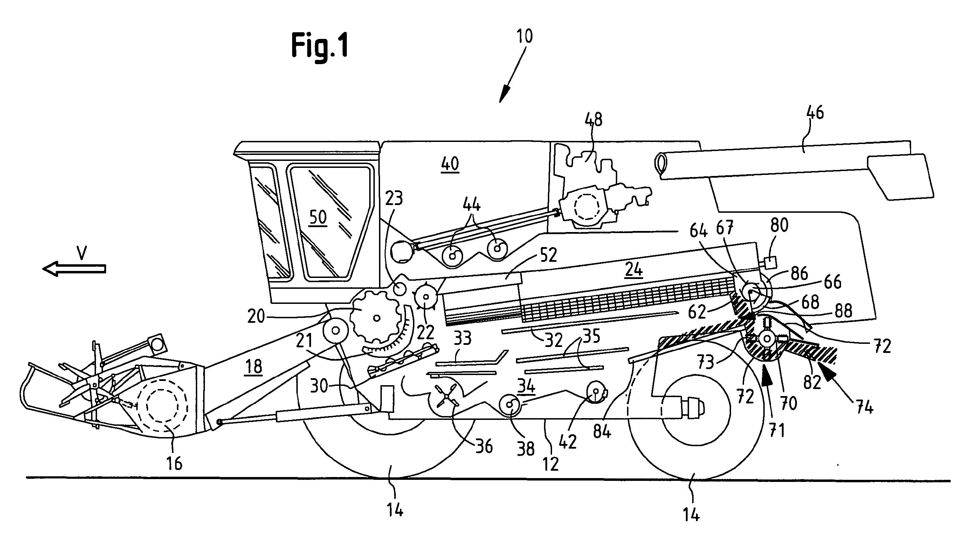

Die Figur 1 zeigt einen selbstfahrenden Mähdrescher 10 mit einem Tragrahmen 12, der sich über vordere, angetriebene und hintere lenkbare Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist ein Schneidwerk 16 angeschlossen, um Erntegut von dem Feld zu ernten und es nach oben und hinten durch einen Schrägförderer 18 Dresch- und Abscheidemitteln zuzuführen.

Die Dresch- und Abscheidemittel umfassen eine quer angeordnete Dreschtrommel 20 und einen dieser zugeordneten Dreschkorb 21. Es ist aber auch denkbar, die Dreschtrommel 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden. Auch die Verwendung von stromab einer Dreschtrommel angeordneten Strohschüttlern oder Abscheidetrommeln als Abscheidemittel ist denkbar.

Eine Abstreifrolle 23 und eine Wendetrommel 22 führen das gedroschene Erntegut von der Dreschtrommel 20 und dem Dreschkorb 21 einem Axialabscheider 24 zu. Der Axialabscheider 24 wird an seiner Rückseite durch ein Getriebe 80 angetrieben. Im Folgenden beziehen sich alle Richtungsangaben, wie vorn, hinten, oben und unten auf die Vorwärtsfahrtrichtung V des Mähdreschers 10.

Getreide und Spreu, die während des Dreschvorgangs abgeschieden werden, fallen auf wenigstens einen Schneckenförderer 30, der sie einem Vorbereitungsboden 33 zuführt. Getreide und Spreu, die aus dem Axialabscheider 24 austreten, fallen auf einen Schüttelboden 32, der sie zur Weitergabe auf den Vorbereitungsboden 33 führt. Der Vorbereitungsboden 33 gibt das Getreide und die Spreu einer Reinigungseinrichtung 34 mit darin angeordneten Sieben 35 weiter, der ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu wird an der Rückseite der Siebeinrichtung auf einen sich in einer Schwingbewegung befindlichen Schwingboden 84 ausgeworfen. Das gereinigte Getreide aus dem Korntank 40 kann durch ein Entladesystem mit Querförderschnecken 44 und einem Entladeförderer 46 entladen werden.

Die genannten Systeme werden mittels eines Verbrennungsmotors 48 angetrieben. Der Mähdrescher 10 wird von einer Bedienungsperson aus einer Fahrerkabine 50 heraus kontrolliert. Die verschiedenen Vorrichtungen zum Dreschen, Fördern, Reinigen und Abscheiden befinden sich innerhalb des Tragrahmens 12.

Vom Axialabscheider 24, der als Trenneinrichtung dient (oder einer der anderen oben genannten, alternativ verwendbaren Trenneinrichtungen), wird ein erster Erntegutrestestrom, der im Wesentlichen aus ausgedroschenen Erntegutresten (Stroh) besteht, durch einen Auslass 64 an der Unterseite des rückwärtigen Endes des nach hinten geschlossenen Axialabscheiders 24 nach unten ausgeworfen. Durch die Wirkung der Fliehkraft und der Schwerkraft gelangen die Erntegutreste in einen vertikalen Auswurfschacht, der nach vorn durch eine vordere Wand 62 begrenzt wird. Unterhalb des Auslasses 64 ist eine Auswurftrommel 66 angeordnet, um deren Umfang Mitnehmer 67 verteilt sind. Nach hinten ist die Auswurftrommel 66 von einer rückwärtigen Wand 86 eingeschlossen. Die Auswurftrommel 66 wird um ihre Längsachse, die sich quer zur Fahrtrichtung erstreckt, durch einen Antrieb in Drehung versetzt, in Figur 1 im Gegenuhrzeigersinn. Etwa auf der halben Höhe der vorderen Wand 62 liegt an ihr, etwa unterhalb der Drehachse der Auswurftrommel 66, ein als Ganzes um die Drehachse der Auswurftrommel 66 schwenkbares Strohleitelement 68 an. Das Strohleitelement 68 kann um diese Achse zwischen der der Figur 1 dargestellten Häckselposition und nach vorn in eine Schwadablageposition verschwenkt werden.

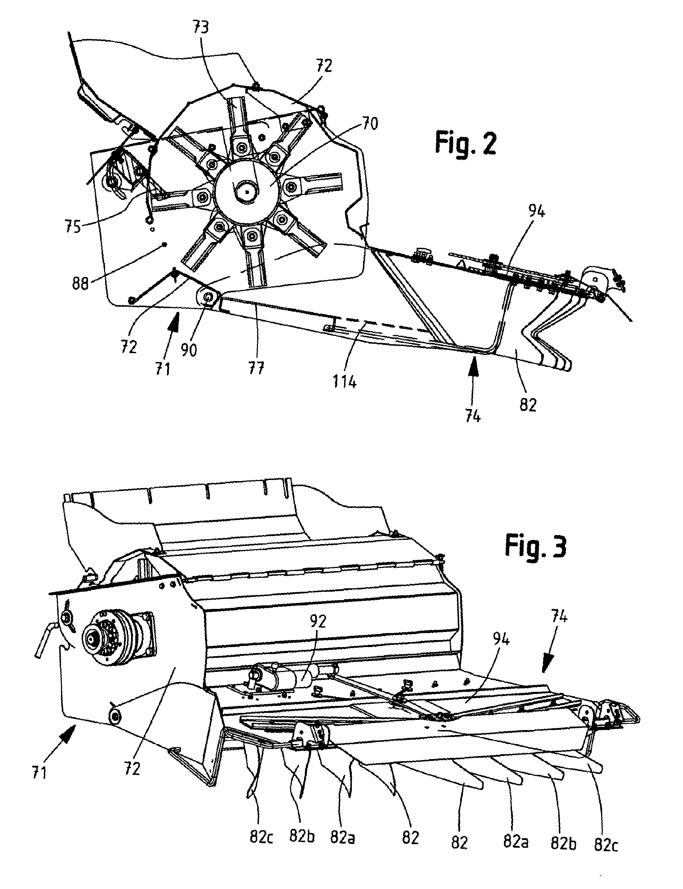

Unterhalb und geringfügig hinter der Auswurftrommel 66 ist in einem Gehäuse 72 ein an sich bekannter Strohhäcksler 71 mit einem Rotor 70 angeordnet, der um eine horizontale, quer zur Fahrtrichtung verlaufende Achse (in den Figuren im Gegenuhrzeigersinn) durch einen Antrieb in Drehung versetzbar ist. Er umfasst den Rotor 70 mit pendelnd daran aufgehängten Häckselmessern 73, die mit im Gehäuse 72 angeordneten stationären Gegenmessern 75 (s. Figur 2) zusammenwirken, um die Erntegutreste zu häckseln und mittels einer mit Leitblechen 82 ausgestatteten Verteilvorrichtung 74 etwa über die Schnittbreite des Mähdreschers 10 auf dem Feld zu verteilen.

Der Schwingboden 84 erstreckt sich vom hinteren, unteren Ende der Reinigungseinrichtung 34 schräg nach hinten und oben bis zu einem Häckslereinlass 88. Der Schwingboden 84 wird durch geeignete Antriebe, z. B. Exzenter, ähnlich dem Schüttelboden 32 entlang seiner Längsrichtung in eine hin- und hergehende Schwingbewegung versetzt. Da der Schwingboden 84 mit sägezahnförmigen Stufen versehen ist, wandern die Spreu und andere Kurzstrohanteile, die als zweiter Erntegutrestestrom von der Reinigungseinrichtung 34 an deren hinterem Ende durch die Wirkung des Gebläses 36 und durch die Schwerkraft auf den Schwingboden 84 abgegeben werden, auf dem Schwingboden 84 nach hinten und oben, wo sie durch die Öffnung 88 abgegeben werden und in den Strohhäcksler 70 hinein gelangen.

Die Figur 2 zeigt eine seitliche Ansicht des Strohhäckslers 71 und der Verteilvorrichtung 74, aus der erkennbar ist, dass die Verteilvorrichtung 74 um eine horizontal und quer zur Vorwärtsrichtung verlaufende Achse 90 schwenkbar am Gehäuse 72 des Strohhäckslers 71 angelenkt ist. Die Befestigung der Verteilvorrichtung 71 am Rahmen 12 in wählbaren Schwenkwinkeln der Verteilvorrichtung 71 um die Achse 90 erfolgt durch mit dem Rahmen 12 verbindbare Streben an der Oberseite der Verteilerhaube 94 der Verteilvorrichtung 71, wie in der DE 10 2004 014 306 A beschrieben wird.

Die Figur 3 zeigt eine rückwärtige perspektivische Ansicht des Strohhäckslers 71 und der Verteilvorrichtung 74. Die rückwärtigen Enden der Leitbleche 82 sind durch einen Verstellmotor 92 in seitlicher Richtung verstellbar, um die Auswurfrichtung manuell oder selbsttätig an die jeweilige Windrichtung und -stärke und/oder an eine Seitenhangneigung anpassen zu können. Unterhalb der Verteilerhaube 94 sind insgesamt acht zur Längsmittelebene des Mähdreschers 10 symmetrische Leitbleche 82 angeordnet. Beidseits der Längsmittelebene des Mähdreschers 10 befinden sich demnach jeweils vier Leitbleche 82, 82a, 82b, 82c, die jeweils unterschiedliche, nach außen hin ansteigende Krümmungswinkel aufweisen und deshalb mit unterschiedlichen Bezugszeichen gekennzeichnet sind.

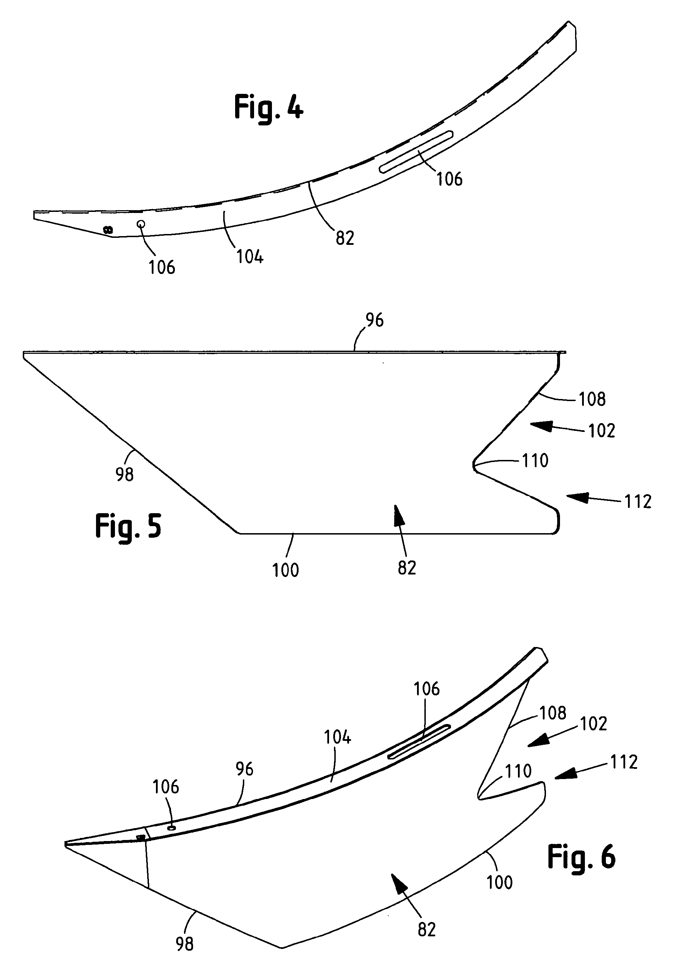

Eines der Leitbleche 82 ist in den Figuren 4 bis 6 in vergrößerter Darstellung wiedergegeben. Es kann aus Blech, insbesondere Stahlblech, oder trotz seiner Bezeichnung aus einem beliebigen anderen Material, wie Kunststoff bestehen und weist einen geraden oberen Rand 96, einen nach hinten und unten abgeschrägten vorderen Rand 98, einen geraden unteren Rand 100 sowie einen näherungsweise V-förmigen rückwärtigen Rand 102 auf.

Der rückwärtige Rand 102 umfasst somit einen oberen Bereich 108, der sich von einer rückwärtigen oberen Ecke des Leitblechs 82 geradlinig schräg nach vorn und unten und etwa über 2/3 der Höhe des Leitblechs erstreckt und an einem unteren Ende 110 endet. Es schließt sich nach unten ein unterer Bereich 112 des rückwärtigen Randes 102 an, der sich vom Ende 110 zunächst schräg nach hinten und unten und schließlich etwa vertikal nach unten erstreckt.

Der obere Rand 96 ist, wie anhand der Figur 4 erkennbar ist, zur Bildung eines Befestigungsflanschs 104 mit Befestigungsöffnungen 106 nach außen umgebogen. Die Figuren 4 und 6 zeigen auch, dass das Leitblech 82 in sich gekrümmt ist.

Anhand der Figur 2 ist ersichtlich, dass sich das untere Ende 110 des oberen Bereichs 108 des rückwärtigen Rands 102 des Leitblechs 82 geringfügig oberhalb einer gedachten tangentialen Verlängerung 114 des Bodenblechs 77 des Gehäuses 72 des Strohhäckslers 71 befindet. Die leichteren Erntegutreste werden durch den Strohhäcksler 71 oberhalb der gedachten Verlängerung 114 des Bodenblechs abgegeben und wirken deshalb mit dem oberen Bereich 108 des rückwärtigen Rands 102 des Leitblechs 82 zusammen. Sie werden demnach abhängig von ihrer Höhe in unterschiedlichen Winkeln zur Seite abgelenkt und breit und homogen über das Feld verteilt. Die schwereren Erntegutreste, insbesondere Verlustkörner aus der Reinigungseinrichtung, werden etwa auf der gedachten Verlängerung 114 nach hinten abgegeben und wirken mit dem unteren Bereich 112 des rückwärtigen Rands 102 zusammen, der sie wiederum weiter zur Seite ablenkt, als sie am unteren Ende 110 des oberen Bereichs 108 des rückwärtigen Rands 102 des Leitblechs 82 abgelenkt würden. Sie werden durch Reibung mit der Luft nach und nach abgebremst und verteilen sich ebenfalls gleichmäßig über den Boden.

Anders als dargestellt können der untere Rand 100, der vordere Rand 98 und/oder der obere Rand 96 des Leitblechs 82 auch nicht geradlinig, sondern beliebig geformt, insbesondere gekrümmt sein. Der obere Bereich 108 des rückwärtigen Rands 102 muss nicht unbedingt geradlinig sein, sondern könnte auch treppenförmig, gekrümmt oder schlangenförmig gestaltet sein, solange er sich von der hinteren oberen Ecke des Leitblechs 82 insgesamt nach unten und vorn erstreckt.

## Patentansprüche

1. Leitblech (82) für eine Verteilvorrichtung (74) eines Strohhäckslers (71), das durch einen oberen Rand (96), einen vorderen Rand (98), einen unteren Rand (100) und einen rückwärtigen Rand (102) begrenzt wird und in sich gekrümmt ist, wobei sich ein oberer Bereich (108) des rückwärtigen Rands (102) vom rückwärtigen Ende des oberen Rands (96) nach unten und vorn erstreckt, **dadurch gekennzeichnet, dass** der untere Rand (100) sich über ein unteres Ende (110) des oberen Bereichs (108) des rückwärtigen Rands (102) hinaus nach hinten erstreckt.

2. Leitblech (82) nach Anspruch 1, **dadurch gekennzeichnet, dass** das rückwärtige Ende des unteren Rands (100) durch einen unteren Bereich (112) des rückwärtigen Rands (102) mit dem unteren Ende (110) des oberen Bereichs (108) des rückwärtigen Rands (102) verbunden ist.

3. Leitblech (10) nach Anspruch 2, **dadurch gekennzeichnet, dass** sich der untere Bereich (112) des rückwärtigen Rands (102) im Wesentlichen geradlinig vom rückwärtigen Ende des unteren Rand (100) nach oben und darüber nach vorn und oben bis zum unteren Ende (110) des oberen Bereichs (108) des rückwärtigen Rands (102) erstreckt.

4. Verteilvorrichtung (74) für einen Strohhäcksler (71) mit einer Verteilerhaube (94) und mindestens einem daran befestigten Leitblech (82) nach einem der vorhergehenden Ansprüche.

5. Strohhäcksler (71) mit einem ein Bodenblech (77) umfassenden Gehäuse (72), einem mit Messern (73) besetzten, im Gehäuse (72) drehbar angeordneten Rotor (70) und einer Verteilvorrichtung (74) nach Anspruch 4.

6. Strohhäcksler (71) nach Anspruch 5, **dadurch gekennzeichnet, dass** sich das untere Ende (110) des oberen Bereichs (108) des rückwärtigen Rands (102) des Leitblechs (82) oberhalb einer gedachten tangentialen Verlängerung (114) des Bodenblechs (77) befindet.

7. Mähdrescher (10) mit einem Strohhäcksler (71) nach Anspruch 5 oder 6.

8. Mähdrescher (10) nach Anspruch 7, **dadurch gekennzeichnet, dass** er eine Reinigungseinrichtung umfasst, deren Erntegutreste in den Strohhäcksler (71) förderbar sind.

## Claims

1. Guide plate (82) for a distributor device (74) of a chaff chopper (71), which guide plate is bounded by an upper edge (96), a front edge (98), a lower edge (100) and a rear edge (102) and is curved per se, wherein an upper region (108) of the rear edge (102) extends downwards and forwards from the rear end of the upper edge (96), **characterized in that** the lower edge (100) extends rearwards beyond a lower end (110) of the upper region (108) of the rear edge (102).

2. Guide plate (82) according to Claim 1, **characterized in that** the rear end of the lower edge (100) is connected by a lower region (112) of the rear edge (102) to the lower end (110) of the upper region (108) of the rear edge (102).

3. Guide plate (10) according to Claim 2, **characterized in that** the lower region (112) of the rear edge (102) extends upwards substantially rectilinearly from the rear end of the lower edge (100) and then forwards and upwards as far as the lower end (110) of the upper region (108) of the rear edge (102).

4. Distributor device (74) for a chaff chopper (71) with a distributor hood (94) and at least one guide plate (82) fastened thereto according to one of the preceding claims.

5. Chaff chopper (71) with a housing (72) comprising a bottom plate (77), a rotor (70) which is equipped with blades (73) and is arranged rotatably in the housing (72), and a distributor device (74) according to Claim 4.

6. Chaff chopper (71) according to Claim 5, **characterized in that** the lower end (110) of the upper region (108) of the rear edge (102) of the guide plate (82) is located above an imaginary tangential extension (114) of the bottom plate (77).

7. Combine harvester (10) with a chaff chopper (71) according to Claim 5 or 6.

8. Combine harvester (10) according to Claim 7, **characterized in that** it comprises a cleaning device, the crop residues of which can be conveyed into the chaff chopper (71).

## Revendications

1. Tôle déflectrice (82) pour un dispositif de répartition (74) d'un hache-paille (71), qui est limitée par un bord supérieur (96), un bord avant (98), un bord inférieur (100) et un bord arrière (102) et qui est courbée en soi, une région supérieure (108) du bord arrière (102) s'étendant depuis l'extrémité arrière du bord supérieur (96) vers le bas et vers l'avant, **caractérisée en ce que** le bord inférieur (100) s'étend vers l'arrière au-delà d'une extrémité inférieure (110) de la région supérieure (108) du bord arrière (102).

2. Tôle déflectrice (82) selon la revendication 1, **caractérisée en ce que** l'extrémité arrière du bord inférieur (100) est connectée par une région inférieure (112) du bord arrière (102) à l'extrémité inférieure (110) de la région supérieure (108) du bord arrière (102).

3. Tôle déflectrice (82) selon la revendication 2, **caractérisée en ce que** la région inférieure (112) du bord arrière (102) s'étend essentiellement en ligne droite depuis l'extrémité arrière du bord inférieur (100) vers le haut et au-delà vers l'avant et le haut jusqu'à l'extrémité inférieure (110) de la région supérieure (108) du bord arrière (102).

4. Dispositif de répartition (74) pour un hache-paille (71) comprenant une hotte de distribution (94) et au moins une tôle déflectrice (82) fixée sur celle-ci, selon l'une quelconque des revendications précédentes.

5. Hache-paille (71) comprenant un boîtier (72) comprenant une tôle de fond (77), un rotor (70) disposé à rotation dans le boîtier (72) et garni de lames de coupe (73), et un dispositif de répartition (74) selon la revendication 4.

6. Hache-paille (71) selon la revendication 5, **caractérisé en ce que** l'extrémité inférieure (110) de la région supérieure (108) du bord arrière (102) de la tôle déflectrice (82) se trouve au-dessus d'un prolongement tangentiel imaginaire (114) de la tôle de fond (77).

7. Moissonneuse-batteuse (10) comprenant un hache-paille (71) selon la revendication 5 ou 6.

8. Moissonneuse-batteuse (10) selon la revendication 7, **caractérisée en ce qu'**elle comprend un dispositif de nettoyage dont les résidus de récolte peuvent être transportés dans le hache-paille (71).
